# EUROPÄISCHE PATENTSCHRIFT

(11) **EP 1 881 170 B1**
(45) Veröffentlichungstag und Bekanntmachung des Hinweises auf die Patenterteilung: **04.03.2009**
(21) Anmeldenummer: 07014022.3
(22) Anmeldetag: 18.07.2007
(51) Int. Cl.: F01P 5/12, F01P 7/08, F04D 13/02, F16D 27/00

(54) **Antriebsorgan für eine Wasserpumpe**
Drive unit for a water pump
Organe de commande pour une pompe à eau

(30) Priorität: 21.07.2006 DE 102006034308
(43) Veröffentlichungstag der Anmeldung: 23.01.2008
(73) Patentinhaber: Linnig Trucktec GmbH, 88677 Markdorf (DE)
(72) Erfinder: Krafft, Rainer, 88633 Heiligenberg (DE); Wolf, Andreas, 88068 Tettnang (DE)
(74) Vertreter: Dobler, Markus

(56) Entgegenhaltungen:
- DE-A1- 10 037 094
- DE-A1- 10 158 732
- DE-A1- 10 242 014
- GB-A- 831 708

## Beschreibung

Die Erfindung betrifft ein Antriebsorgan für eine Wasserpumpe nach dem Oberbegriff des Anspruchs 1

### Stand der Technik

Aus der deutschen Offenlegungsschrift DE 101 58 732 A1 ist ein Antriebsorgan für eine Wasserpumpe des Kühlwasserkreislaufes eines Verbrennungsmotors bekannt.

Das Antriebsorgan umfasst ein Antriebsrad und eine Welle, die mit der Wasserpumpe gekoppelt ist. Zur Momentenübertragung zwischen Antriebsrad und Welle ist eine elektromagnetisch betätigbare Reibschaltkupplung sowie eine zweite Kupplungsvorrichtung in Form einer Wirbelstromkupplung vorgesehen, die die Welle bei sich außer Eingriff befindender Reibschaltkupplung mitschleppt.

Hierdurch lässt sich bereits ein effektiver Antrieb einer Kühlwasserpumpe bei Verbrennungsmotoren gestalten.

### Aufgabe und Vorteile der Erfindung

Der Erfindung liegt die Aufgabe zugrunde, ein Antriebsorgan der einleitend bezeichneten Art so auszugestalten, dass der Anwendungsbereich vergrößert ist.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einem Antriebsorgan für eine Wasserpumpe des Kühlwasserkreislaufs eines Verbrennungsmotors mit einem Antriebsrad, einer Welle, die mit der Wasserpumpe gekoppelt ist, und einer elektromagnetisch betätigbaren Reibschaltkupplung zur Momentenübertragung zwischen dem Antriebsrad und der Welle aus. Der Kern der Erfindung liegt darin, dass mit der Reibschaltkupplung eine Momentenübertragung zu einem Abtriebsrad schaltbar ist. Beispielsweise ist das Antriebsrad eine Riemenscheibe, die vom Motor angetrieben wird.

Das Abtriebsrad ist vorzugsweise ebenfalls eine Riemenscheibe, über welche mit einem entsprechenden Riemen z.B. ein Lüfterrad angetrieben werden kann.

Damit ist es möglich, z.B. ein Lüfterrad über das Abtriebsrad zu zuschalten, in dem über die Reibschaltkupplung das Abtriebsrad zugeschaltet wird, ohne das eine weitere Kupplungseinheit erforderlich wäre.

Vorzugsweise ist das Antriebsrad auf der Welle gelagert, z.B. über ein Wälzlager. Ebenso ist es bevorzugt, wenn auch das Abtriebsrad in entsprechender Weise auf der Welle permanent an der Wasserpumpe gelagert ist. Damit lässt sich eine kompakte Bauweise realisieren.

In einer bevorzugten Ausgestaltung der Erfindung ist zwischen dem Antriebsrad und dem Abtriebsrad eine Ankerscheibe angeordnet. Die Ankerscheibe ist vorzugsweise radial geteilt. Ein erster Teil der Ankerscheibe ist vorteilhafterweise mit der Welle permanent verbunden, wogegen vorzugsweise der zweite Teil der Ankerscheibe mit dem Abtriebsrad permanent verbunden ist, z.B. über eine Feder. Im Weiteren ist es vorteilhaft, wenn die Reibschaltkupplung zwei Elektromagnete umfasst, die separat schaltbar sind. Mit einem ersten Elektromagneten kann z.B. der Teil der Ankerscheibe an das Antriebsrad herangezogen werden, der mit dem Abtriebsrad drehfest verbunden ist, womit sich das Abtriebsrad auf gleicher Drehzahl wie das erste Antriebsrad antreiben lässt.

Über den zweiten Elektromagneten kann der erste Teil der Ankerscheibe mit dem Antriebsrad in Verbindung gebracht werden, womit die Welle der Wasserpumpe sich auf die Drehzahl des Antriebsrads bringen lässt.

In einer weiteren vorteilhaften Ausgestaltung der Erfindung ist es jedoch auch denkbar, nur einen Elektromagneten vorzusehen. In diesem Zusammenhang ist es dann bevorzugt, wenn eine Elektronikeinheit vorgesehen ist, um den Elektromagneten auf wenigstens zwei Feldstärkestufen zu betreiben. Bei einer ersten Feldstärkestufe wird vorzugsweise nur der erste Teil der Ankerscheibe, der mit der Welle in Verbindung steht, mit dem Antriebsrad verbunden. Damit lässt sich die Welle auf die gleiche Drehzahl wie das Antriebsrad bringen. Bei einer zweiten Feldstärkestufe, die vorzugsweise höher ist als die erste Feldstärkestufe wird der zweite Teil der Ankerscheibe, mit dem das Abtriebsrad verbunden ist, kraftschlüssig mit dem Antriebsrad in Kontakt gebracht, so dass das Abtriebsrad auf der gleichen Drehzahl arbeitet wie das Antriebsrad.

Um eine Wasserpumpe mit einer Grunddrehzahl arbeiten lassen zu können, wird überdies vorgeschlagen, dass eine Wirbelstromkupplung vorgesehen ist, die die Welle bei nicht geschaltetem ersten Teil der Ankerscheibe mitschleppt. Vorzugsweise ist dann die Reibschaltkupplung vollständig außer Eingriff. Ein Teil der Wirbelstromkupplung kann mit dem Antriebsrad permanent verbunden sein.

Beispielsweise sind an diesem Permanentmagneten angeordnet.

### Zeichnungen

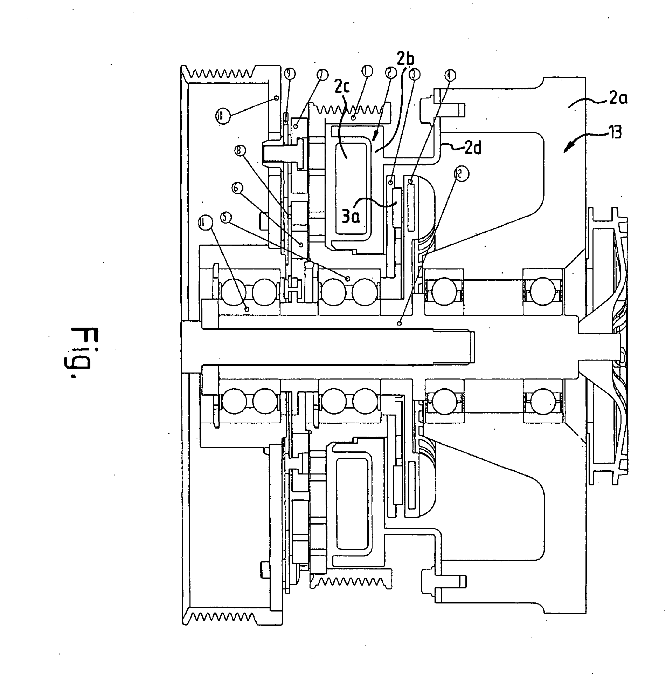

Ein Ausführungsbeispiel der Erfindung ist in der Zeichnung dargestellt und wird unter Angabe weiterer Vorteile und Einzelheiten nachstehend näher erläutert. Die Figur zeigt ein Antriebsorgan für eine Wasserpumpe eines Kühlwasserkreislaufs eines Verbrennungsmotors in einem Schnitt entlang der Drehachse einer Pumpenwelle der Kühlwasserpumpe.

### Beschreibung des Ausführungsbeispiels

Das Antriebsorgan besteht aus einem bevorzugt permanent angetriebenen Rotor 1 mit integrierter Riemenscheibe, der auf einem Wälzlager 5 einer Welle 12 einer Wasserpumpe 13 (nur teilweise dargestellt) gelagert ist. Innerhalb des Radius des Rotors 1 ist eine Elektromagnet-Anordnung 2 vorgesehen, die sich an einem Gehäuse 2a der Wasserpumpe 13 über die Drehmomentstütze 2d abstützt. Die Elektromagnet-Anordnung 2 umfasst einen Stator 2b in dem ein Elektromagnet 2c angeordnet ist, der z.B. mit einem Kabel vom Bordsystem eines Fahrzeugs (nicht dargestellt) mit elektrischer Leistung versorgt werden kann. Am Rotor 1 ist vorzugsweise kraftschlüssig ein Permanentmagnetträger 3 mit Permanentmagneten 3a befestigt, dem über einen Spalt berührungsfrei ein Kühlring 4 mit eingelagertem, z.B. eingegossenem Stahlring 4a als Rückschlusselement für ein Magnetfeld, dass die Wirbelströme ausbilden, gegenübersteht. Der Kühlring 4 ist z.B. über eine form- /kraftschlüssige Verbindung mit der Pumpenwelle 12 permanent verbunden. Dem Rotor 1 gegenüber angeordnet ist eine zweite Riemenscheibe 10, die ebenfalls über ein Wälzlager 11 auf der Pumpenwelle 12 drehbar gelagert ist. Die Riemenscheibe 10 treibt z.B. über einen Riementrieb eine auf der Kurbelwelle oder einem separaten Lagerbock gelagerte regelbare Lüfterkupplung oder direkt ein Lüfterrad an. An der Riemenscheibe 10 ist über eine Feder 9 eine Ankerscheibe 7 permanent befestigt, so dass sie axial verschieblich ist. Eine zweite Ankerscheibe 6 ist über eine Feder 8 permanent mit der Pumpenwelle 12 verbunden. Die Feder 8 lässt ebenfalls eine axiale Bewegung der Ankerscheibe 6 zu.

### Funktionsweise des Antriebsorgans:

Der Rotor 1 mit Riemenscheibe wird z.B. permanent von einem Riementrieb von einer Kurbelwelle eines Verbrennungsmotors angetrieben. Da der Permanentmagnetträger kraftschlüssig mit dem Rotor 1 verbunden ist, läuft dieser permanent mit Rotorantriebzahl mit. Das magnetischen Feld der Permanentmagnete 3a erzeugt im Kühlring 4 Wirbelströme, die zu einem Mitdrehen des Kühlrings 4 führen, der wiederum die Pumpenwelle 12 und damit die Wasserpumpe mit einer Grunddrehzahl antreibt.

Wird nun der Elektromagnet 2c z.B. über ein pulsweitenmoduliertes Signal mit einer elektrischen Leistung der Größe P1 betrieben, so wird die Ankerscheibe 6 angezogen. Damit wird das Wirbelstromprinzip zwischen den Teilen 3 und 4 überbrückt. Die Pumpenwelle 12 wird jetzt permanent mit der Antriebsdrehzahl des Rotors 1 angetrieben. Für den Fall, dass der Elektromagnet 2c mit einer elektrischen Leistung P2 durch ein pulsweitenmoduliertes Signal beaufschlagt ist, wobei die elektrische Leistung P2 größer ist als die elektrische Leistung P1, wird neben der Ankerscheibe 6 nunmehr auch die Ankerscheibe 7 angezogen. Dies wird vorzugsweise dadurch ermöglicht, dass die notwendige Auslenkkraft der Feder 8 kleiner ist als die notwendige Auslenkkraft der Feder 9. Dies lässt sich beispielsweise über die Federsteifigkeit der Federn 8 und 9 einstellen. Bei angezogener Ankerscheibe 7 läuft die Riemenscheibe 10 mit gleicher Antriebsdrehzahl wie der Rotor 1. Damit lässt sich ein Lüfterrad (nicht dargestellt) mit der Antriebsdrehzahl bzw. in einer Drehzahl in einem vorgegebenen Übersetzungsverhältnis der Antriebsdrehzahl des Rotors 1 antreiben.

## Patentansprüche

1. Antriebsorgan für eine Wasserpumpe des Kühlwasserkreislaufs eines Verbrennungsmotors mit einem Antriebsrad (1), einer Welle (12), die mit der Wasserpumpe gekoppelt ist, und einer elektromagnetisch betätigbaren Reibschaltkupplung zur Momentenübertragung zwischen dem Antriebsrad (1) und der Welle (12), **dadurch gekennzeichnet, dass** mit der Reibschaltkupplung eine Momentenübertragung zu einem auf der Welle (12) drehbar gelagerten Abtriebsrad (10) schaltbar ist.

2. Antriebsorgan nach Anspruch 1, **dadurch gekennzeichnet, dass** das Antriebsrad (1) auf der Welle (12) gelagert ist.

3. Antriebsorgan nach einem der vorhergehenden Ansprüche, **dadurch gekennzeichnet, dass** zwischen dem Antriebsrad und dem Abtriebsrad eine Ankerscheibe (6, 7) angeordnet ist.

4. Antriebsorgan nach Anspruch 3, **dadurch gekennzeichnet, dass** die Ankerscheibe (6, 7) in radialer Richtung geteilt ist.

5. Antriebsorgan nach einem der vorhergehenden Ansprüche 3 und 4, **dadurch gekennzeichnet, dass** ein erster Teil (6) der Ankerscheibe (6, 7) mit der Welle (12) permanent verbunden ist.

6. Antriebsorgan nach einem der vorhergehenden Ansprüche 3 bis 5, **dadurch gekennzeichnet, dass** ein zweiter Teil (7) der Ankerscheibe (6, 7) mit dem Abtriebsrad (10) permanent verbunden ist.

7. Antriebsorgan nach einem der vorhergehenden Ansprüche, **dadurch gekennzeichnet, dass** die Reibschaltkupplung zwei Elektromagnete umfasst, die separat schaltbar sind.

8. Antriebsorgan nach einem der vorhergehenden Ansprüche 1 bis 6, **dadurch gekennzeichnet, dass** die Reibschaltkupplung nur einen Elektromagneten (2c) umfasst.

9. Antriebsorgan nach einem der vorgehenden Ansprüche, **dadurch gekennzeichnet, dass** eine Elektronikeinheit vorgesehen ist, um einen Elektromagneten (2c) der Reibschaltkupplung auf wenigstens zwei Feldstärkestufen zu betreiben.

10. Antriebsorgan nach einem der vorhergehenden Ansprüche 5 bis 9, **dadurch gekennzeichnet, dass** eine Wirbelstromkupplung vorgesehen ist, die die Welle (12) bei nicht geschaltetem ersten Teil (6) der Ankerscheibe (6, 7) mitschleppt.

## Claims

1. Drive member for a water pump of a cooling water circuit of an internal combustion engine, comprising a drive wheel (1), a shaft (12) coupled to the water pump, and an electromagnetically activated frictional shift clutch for the transfer of torque between the drive wheel (1) and the shaft (12), **characterised in that** a transfer of torque to a driven wheel (10) mounted rotatably on the shaft (12) can be shifted by means of the frictional shift clutch.

2. Drive member according to claim 1, **characterised in that** the drive wheel (1) is mounted on the shaft (12).

3. Drive member according to one of the preceding claims, **characterised in that** an armature disc (6, 7) is arranged between the drive wheel and the driven wheel.

4. Drive member according to claim 3, **characterised in that** the armature disc (6, 7) is divided in radial direction.

5. Drive member according to one of the preceding claims 3 and 4, **characterised in that** a first part (6) of the armature disk (6, 7) is connected permanently to the shaft (12).

6. Drive member according to one of the preceding claims 3 to 5, **characterised in that** a second part (7) of the armature disk (6, 7) is connected permanently to the driven wheel (10).

7. Drive member according to one of the preceding claims, **characterised in that** the frictional shift clutch comprises two electromagnets, which can be switched separately.

8. Drive member according to one of the preceding claims 1 to 6, **characterised in that** the frictional shift clutch comprises only one electromagnet (2c).

9. Drive member according to one of the preceding claims, **characterised in that** an electronic unit is provided in order to operate an electromagnet (2c) of the frictional shift clutch in at least two field strength steps.

10. Drive member according to one of the preceding claims 5 to 9, **characterised in that** an eddy current clutch is provided, which takes up the shaft (12) when the first part (6) of the armature disk (6, 7) is not shifted.

## Revendications

1. Organe de commande pour la pompe à eau du circuit d'eau de refroidissement d'un moteur thermique comportant une roue de commande (1), un arbre (12) couplé à la pompe à eau et un embrayage à friction pouvant être actionné de manière électromagnétique pour transmettre les moments entre la roue de commande (1) et l'arbre (12),
**caractérisé en ce qu'**avec l'embrayage à friction la transmission de moment peut être couplée à une roue de sortie (10) montée en rotation sur l'arbre (12).

2. Organe de commande selon la revendication 1,
**caractérisé en ce que** la roue de commande (1) est montée sur l'arbre (12).

3. Organe de commande selon l'une des revendications précédentes,
**caractérisé en ce qu'**il est agencé un disque d'induit (6, 7) entre la roue de commande et la roue de sortie.

4. Organe de commande selon la revendication 3,
**caractérisé en ce que** le disque d'induit (6, 7) est divisé dans le sens radial.

5. Organe de commande selon l'une des revendications 3 ou 4,
**caractérisé en ce qu'**une première partie (6) du disque d'induit (6, 7) est reliée en permanence à l'arbre (12).

6. Organe de commande selon l'une des revendications 3 à 5,
**caractérisé en ce qu'**une seconde partie (7) du disque d'induit (6, 7) est reliée en permanence à la roue de sortie (10).

7. Organe de commande selon l'une des revendications précédentes,
**caractérisé en ce que** l'embrayage à friction comporte deux électroaimants qui peuvent être actionnés séparément.

8. Organe de commande selon l'une des revendications 1 à 6,
**caractérisé en ce que** l'embrayage à friction ne comporte qu'un électro-aimant (2c).

9. Organe de commande selon l'une des revendications précédentes,
**caractérisé en ce qu'**il est prévu une unité électronique afin de faire fonctionner un électro-aimant (2c) de l'embrayage à friction sur au moins deux niveaux d'intensité de champ.

10. Organe de commande selon l'une des revendications 5 à 9,
**caractérisé en ce qu'**il est prévu un accouplement à courant de Foucault qui entraîne l'arbre (12) lorsque la première partie (6) du disque d'induit (6, 7) n'est pas actionnée.
